Europäisches Patentamt

European Patent Office

Office européen des brevets

(11) Publication number: **0 355 054**
**A2**

## (12) EUROPEAN PATENT APPLICATION

(21) Application number: 89308084.6

(22) Date of filing: 09.08.89

(51) Int. Cl.⁴: **G09G 3/36**

(30) Priority: 19.08.88 JP 206903/88
28.03.89 JP 34986/89 U

(43) Date of publication of application:
**21.02.90 Bulletin 90/08**

(84) Designated Contracting States:
**DE FR GB IT**

(71) Applicant: SEIKO INSTRUMENTS INC.
**31-1, Kameido 6-chome Koto-ku**
**Tokyo 136(JP)**

(72) Inventor: **Kondo, Kenichi Seiko Instruments**
**Inc.**
**31-1 Kameido 6-chome Koto-ku**
**Tokyo(JP)**

(74) Representative: **Caro, William Egerton et al**
**J. MILLER & CO. Lincoln House 296-302 High**
**Holborn**
**London WC1V 7JH(GB)**

(54) Control circuit for a matrix display.

(57) A control circuit is provided for generating a signal effective for switching the polarity of a driving voltage applied to a matrix display to effect AC driving of the matrix display. The control circuit comprises frequency dividing means (1, 2; 5) which are re-settable by a frame signal effective to initiate line sequential scanning and which are arranged to receive a clock signal effective to control the line sequential scanning. The frequency dividing means divide the frequency of the clock signal to produce a frequent-polarity-inverting signal. The control circuit further comprises adding means (4) for exclusively logically adding the frequent-polarity-inverting signal to an infrequent-polarity-inverting signal, which undergoes polarity switching according to the timing of the frame signal. The adding means thereby generate an added polarity-inverting signal effective to switch the polarity of the driving voltage.

FIG. 1

## CONTROL CIRCUIT FOR A MATRIX DISPLAY

The present invention relates to a control circuit for a matrix display for generating a polarity-inverting signal effective to control the polarity of an AC driving signal of the display.

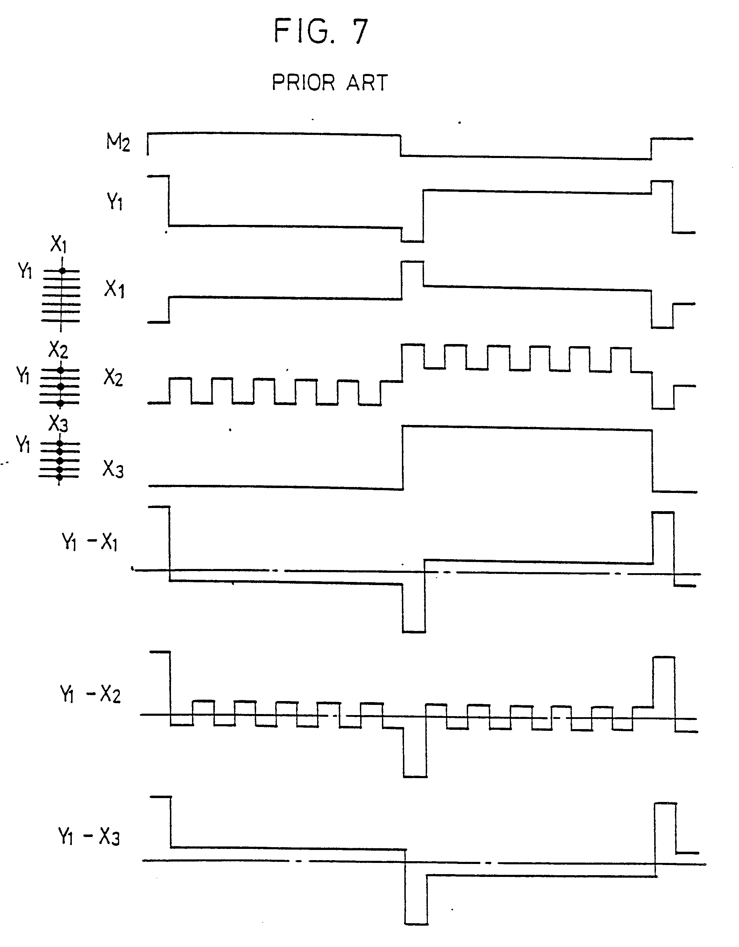

Figure 7 shows the signals employed for driving a conventional liquid crystal matrix display according to a voltage-averaging driving mode. Referring to Figure 7, a waveform $M_2$ represents a polarity-inverting signal for switching the polarity of driving voltages applied to scanning and signal electrodes or lines of the display for AC driving of the display. A waveform $Y_1$ represents the driving voltage applied to a first scanning electrode or line $Y_1$. Waveforms $X_1$ to $X_3$ represent the driving voltages applied to signal electrodes or lines $X_1$, $X_2$ and $X_3$, respectively. By way of example, a single intersection with the signal electrode $X_1$ is in the ON state, the other intersections in the vertical direction along this electrode being in the OFF state; the intersections along the signal electrode $X_2$ are alternately in the ON and the OFF states; and the intersections along the signal electrode $X_3$ in the vertical direction are only in the ON state. The polarity of the respective driving voltages $X_1$ to $X_3$ is inverted in dependence upon the polarity-inverting signal $M_2$. In this driving mode, the bias or driving voltages applied to the intersections between the first scanning electrode $Y_1$ and the respective ones of the signal electrodes X vary in waveform and driving frequency, depending on the assigned display data, as shown by the waveforms $Y_1$ - $X_1$, $Y_1$ - $X_2$, $Y_1$ - $X_3$ Thus, the effective driving frequency of the waveforms $Y_1$ - $X_1$ and $Y_1$ - $X_3$ is 30 Hz and the effective driving frequency of the waveform $Y_1$ - $X_2$ is 12 kHz (in the case of 1/400 duty drive).

In a liquid crystal panel having a two terminal active display drive such as MSI, variation of the bias voltage waveform may degrade the uniformity of the contrast on the display face of the panel, because the amount of electric charge stored in respective liquid crystal capacitive elements varies due to local differences in the liquid crystal capacitances and due to differences in the charge/discharge mode of respective non-linear active resistive elements. Moreover, due to substantial variation in the effective driving frequency depending on the display data assigned to each signal electrode, cross talk tends to occur. Under intensive irradiation from incident light, photo-leakage current also increases in active resistive elements so that the display may fade or become invisible in bright conditions, resulting in deterioration of anti-photo-leakage characteristics. Further, the optimum driving voltage varies depending on the display data because of differences in the waveforms and the driving frequency.

In the conventional voltage averaging mode for driving a matrix display, the above noted variation of the bias voltage waveform and driving frequency are not so influential in the case of low duty driving, such as 1/32 duty driving. However, the ratio of the effective voltages applied to ON or selected intersections and $0°F$ or non-selected intersections becomes very small in the case of high duty driving in an MSI liquid crystal panel provided with non-linear active elements. Therefore, the bias voltage waveform and frequency substantially affects the optical performance of the liquid crystal material, so that the driving conditions must be precisely controlled to obtain a good quality display.

As described above, the applied bias voltage waveform and driving frequency vary depending on the display data in the case of high duty driving in the conventional voltage averaging driving mode. Since the driving conditions depend on display data, contrast of the display varies locally, cross talk is generated according to the display pattern and the optimum driving voltage varies thereby reducing the range of the driving voltage. In addition, active resistive elements produce leakage current due to incident light and deterioration in the display results.

It is an object of the present invention to provide a control circuit for a matrix display for providing improved driving independent of the display pattern in the case of high duty driving so as to permit high display quality at a low production cost.

According to one aspect of the present invention, there is provided a control circuit for generating a signal effective for switching the polarity of a driving voltage applied to a matrix display to effect AC driving of the matrix display, characterised by frequency dividing means re-settable by a frame signal effective to initiate line sequential scanning of the matrix display and receptive of a clock signal effective to control the line sequential scanning, the frequency dividing means being arranged to divide the frequency of the clock signal to provide a frequent-polarity-inverting signal, and adding means for exclusively logically adding the frequent-polarity-inverting signal to an infrequent-polarity-inverting signal, which undergoes polarity switching according to the timing of the frame signal, whereby to produce an added polarity-inverting signal effective to switch the polarity of the driving voltage.

Such a control circuit enables the frequency of a bias or driving voltage applied to the intersections of the matrix electrodes to be made substantially constant irrespective of the display data, and so it is possible to realise a uniform display contrast, levelled current consumption, a reduction in cross talk and an improvement in light leakage characteristics by comparison with a conventional active matrix display.

The display may thus be driven by applying a bias voltage having identical conditions for waveform and frequency to the intersections of the matrix electrodes irrespective of the display data.

In a preferred form of the invention, an exclusive OR circuit carries out the exclusive logic addition of the frequency divided signal, which is obtained by frequency dividing a clock signal effective to control line sequential scanning of the scanning electrodes of a dot matrix display, and a first polarity-inverting signal, which undergoes polarity inversion once in each frame, so as to produce the added polarity-inverting signal for driving the display.

If synchronisation were not carried out in such a case, the added polarity-inverting signal would not match the interface timing of an existing liquid crystal drive due to timing differences in various control circuits which produce an interface signal for the liquid crystal display. Therefore, in some instances it might not be possible to achieve a normal display. In view of the fact that there exist interface timing differences in various control circuits, therefore, the present invention further provides synchronisation means effective to match the timing of the control circuit with the timing of a display drive.

The synchronisation means advantageously eliminate any timing difference between the clock signal and the polarity-inverting signals whereby the control circuit according to the invention is compatible with a display drive IC.

According to another aspect of the invention, there is provided a method of driving a matrix display in which the polarity of the driving voltage applied to the matrix display is periodically switched to effect AC driving of the matrix display, characterised by generating a frequent-polarity-inverting signal responsive to a frame signal effective to initiate line sequential scanning of the matrix display, the frequent-polarity-inverting signal being generated by dividing the frequency of a clock signal effective to control the line sequential scanning, and exclusively logically adding the frequent-polarity-inverting signal to an infrequent-polarity-inverting signal, which undergoes polarity switching according to the timing of the frame signal, whereby to produce an added polarity inverting signal effective to switch the polarity of the driving voltage.

The invention is described further, by way of example, with reference to the accompanying drawings, in which:-

Figure 1 is a circuit diagram showing one embodiment of control circuit according to the present invention;

Figure 2 is a diagram showing the waveforms of driving voltages for a matrix display obtained by means of the present invention;

Figure 3 is a circuit diagram showing another embodiment of control circuit according to the present invention;

Figure 4 is a timing chart illustrating the signals applied to and generated within the Figure 3 circuit;

Figure 5 is a circuit diagram showing a further embodiment of control circuit according to the present invention;

Figure 6 is a timing chart illustrating the signals applied to and generated within the Figure 5 circuit; and

Figure 7 is a diagram showing the waveforms of driving voltages for a matrix display obtained according to a conventional voltage averaging driving mode.

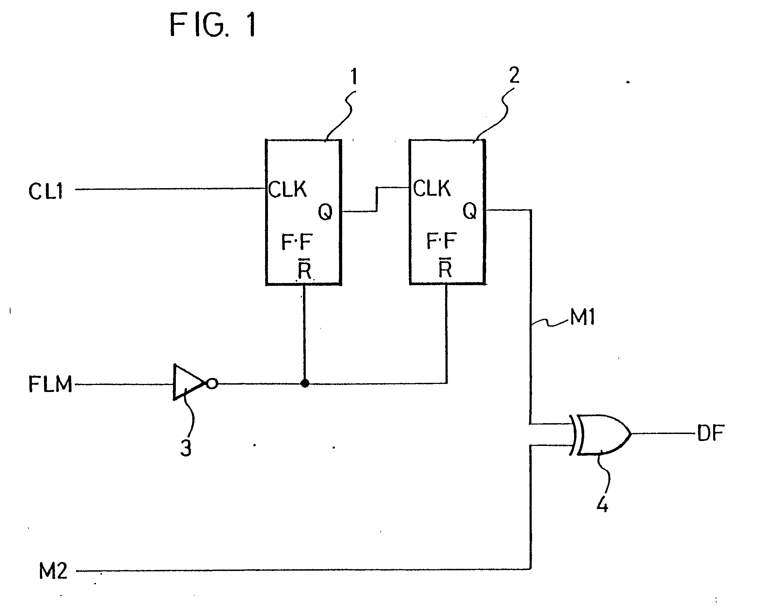

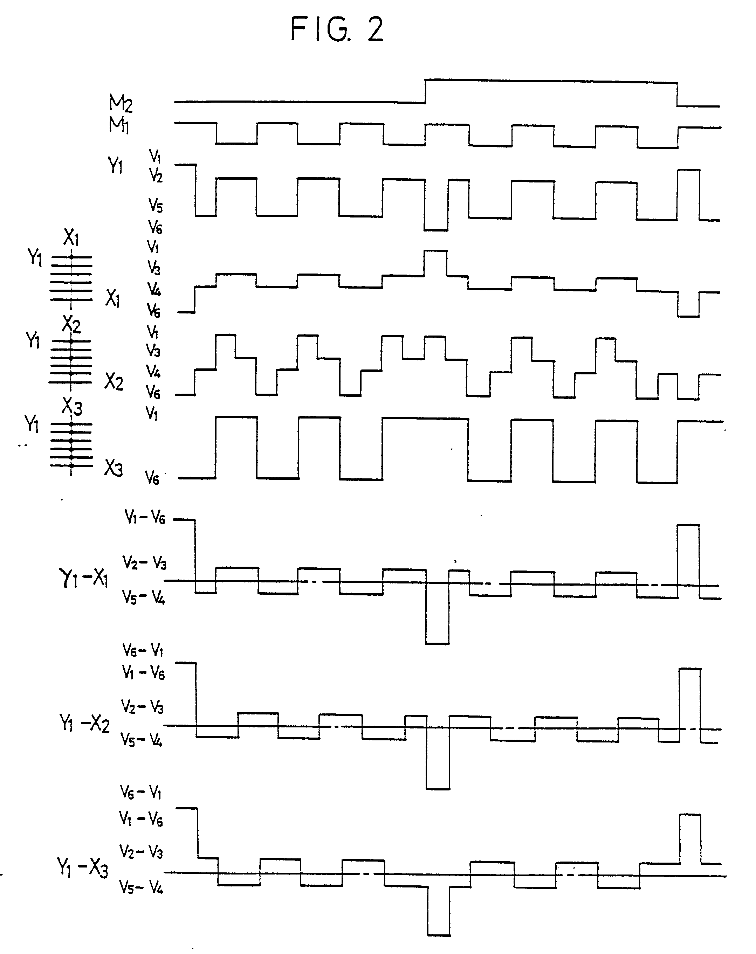

Figure 1 is a circuit diagram showing a first embodiment of control circuit for controlling driving of a matrix display according to the present invention, and Figure 2 shows driving waveforms obtained when such a circuit is employed. In Figure 2, a waveform $M_1$ represents a frequent-polarity-inverting signal effective to switch the polarity of driving voltages for the matrix display once in each period having a duration twice as long as the scanning period of an individual scanning electrode. A waveform $M_2$ represents an infrequent-polarity-inverting signal effective to switch the polarity of the driving voltages once in each frame. A waveform $Y_1$ represents a driving voltage applied to a first scanning electrode $Y_1$. Waveforms $X_1$ to $X_3$ represent, by way of example, driving voltages applied to respective signal electrodes $X_1$ to $X_3$. In a manner similar to that described with reference to Figure 7, a first intersection along the first signal electrode $X_1$ is turned ON and the remaining intersections are turned OFF, the intersections along the second signal electrode $X_2$ are turned ON and OFF alternately, and all of the intersections along the third signal electrode $X_3$ are turned ON according to the assigned display data.

The waveforms $Y_1$, $X_1$, $X_2$ and $X_3$ are controlled so as to switch the polarity of selecting and non-selecting bias voltages applied to the respective intersections according to the polarity of the polarity-inverting signal $M_1$. The frequent-polarity-inverting signal $M_1$ switches its polarity or logic level in every given time duration twice as long as the scanning period assigned to each scanning electrode.

Further, when the infrequent-polarity-inverting

signal $M_2$ is held at the level 0 (low logic level), the selecting and non-selecting bias voltages are set in a first polarity condition. When the polarity-inverting signal $M_2$ is held at the level 1 (high logic level), the selecting and non-selecting bias voltages are switched to a second polarity condition, which is inverted relative to the first polarity condition. The infrequent-polarity-inverting signal $M_2$ switches its logic level between high and low once in each frame, that is once in each period having a given duration 2N times as long as the scanning period of each scanning electrode (assuming N to be the number of scanning electrodes).

With such a driving operation, the bias voltages applied to the respective intersections between the first scanning electrode $Y_1$ and each of the signal electrodes $X_1$ to $X_3$ are as shown by the waveforms $Y_1 - X_1$, $Y_1 - X_2$, and $Y_1 - X_3$ in Figure 2. As may be seen from these synthesised waveforms, the bias voltages applied to the respective intersections have substantially identical driving waveforms and driving frequencies (6 kHz in the case of 1/400 duty driving, i.e. N = 400) even though different display data is assigned to the respective signal electrodes. Accordingly, even during high duty driving, the selecting and non-selecting bias voltages can be applied uniformly to all of the matrix intersections under identical driving conditions.

An MSI active panel has non-linear resistive elements disposed at the matrix intersections and operative to change non-linearly the current flowing therethrough according to the magnitude of the driving voltage applied thereto. When a selecting voltage is applied to the element, charging current flows into a corresponding capacitive element of liquid crystal material such that the charge is held in the capacitive element to display a dot at the selected intersection even during a non-selecting period. Such an active panel generally has the drawback in that it is susceptible to incident light. The stored charge may be discharged due to an increase in the leakage current of the active element produced by the incident light, thereby causing fading or diminishing of the display. Such a drawback is noticable at relatively low driving frequencies. Thus, in the conventional driving mode, the effective driving frequency is incidentally set to 30 Hz, as determined by the frame frequency, in the worst case of all the intersections being in the ON state or all in the OFF state, thereby causing serious susceptibility to incident light as compared with the optimum condition in which the intersections are alternately turned ON and OFF along a signal electrode. On the other hand, according to the present invention, the driving frequency is boosted by a quarter of the scanning frequency of the scanning electrodes for almost all of the display pattern (6 kHz in the case of 1/400 duty driving), thereby considerably reducing the susceptibility of the display to incident light.

Figure 1 is a circuit diagram showing one embodiment of control circuit according to the present invention for achieving the above described improvement. The control circuit in Figure 1 processes various signals such as a shift or synchronising clock signal CLI for shifting the scanning of the scanning electrodes, a frame signal FLM effective to start line sequential scanning in each frame, and an infrequent-polarity-inverting signal $M_2$ undergoing inversion of its polarity one in each frame or in each period having a duration 2N times as long as the period of the shift clock signal. The control circuit comprises frequency dividing means composed of flip-flops 1 and 2 connected in series for frequency dividing the shift clock signal CLI by 1/4, an inverter 3 for inverting the frame signal FLM and an exclusive OR gate 4 for logical processing in order to add exclusively an output signal, constituting the frequent-polarity-inverting signal $M_1$, from the 1/4 frequency dividing means and the infrequent-polarity-inverting signal $M_2$.

The operation of the control circuit will now be explained. The shift clock signal CLI is input into the series connected flip-flops 1 and 2 and is 1/4 frequency divided to produce the 1/4 frequency divided output signal $M_1$. The exclusive OR gate 4 carries out the exclusive adding of the thus obtained signal $M_1$ and the other signal $M_2$ to generate an AC driving control signal DF effective to control the polarity of the bias voltages applied to the liquid crystal elements at the matrix intersections such that the bias voltages have a similar waveform and frequency not depending on the display data or pattern. The frame signal FLM is inverted by the inverter 3 and thereafter is applied to re-set terminals of the flip-flops 1 and 2 of the 1/4 frequency dividing means to re-set the same so as initialise the same in each frame whereby to effect the polarity-inversion in a predetermined direction. Consequently, the display is not disturbed by noise and is not driven according to an inverting or controlling signal of a different polarity in each frame. Further, ill effects in the display, such as flicker generated every two scanning electrodes in the entire display due to mis-match in timing, can also be avoided. Moreover, the anti-photo-leakage characteristics are greatly improved to achieve a better display quality.

As described above, the present AC driving control circuit enables the display to be driven by bias voltages applied to the matrix intersections having the same conditions with regard to driving waveform and frequency irrespective of the contents of the display data. Hence, non-uniformity in the contrast of the display due to variation of the display data can be removed, the generation of cross talk due to frequency changes with variation of the display pattern can be suppressed, and the optimum range of the bias voltage can be broadened. Further, with reference to the anti-photo-leakage characteristics of the active panel, the display does not diminish or fade even under irradiation with 100,000 lux of incident light, and so the active liquid crystal panel when controlled by the present circuit can be installed into OHP. The control circuit according to the present invention thus eliminates various drawbacks of the active panel, permitting an increase in the yield rate of the active panel and a decrease in the production cost, with a greatly improved display quality.

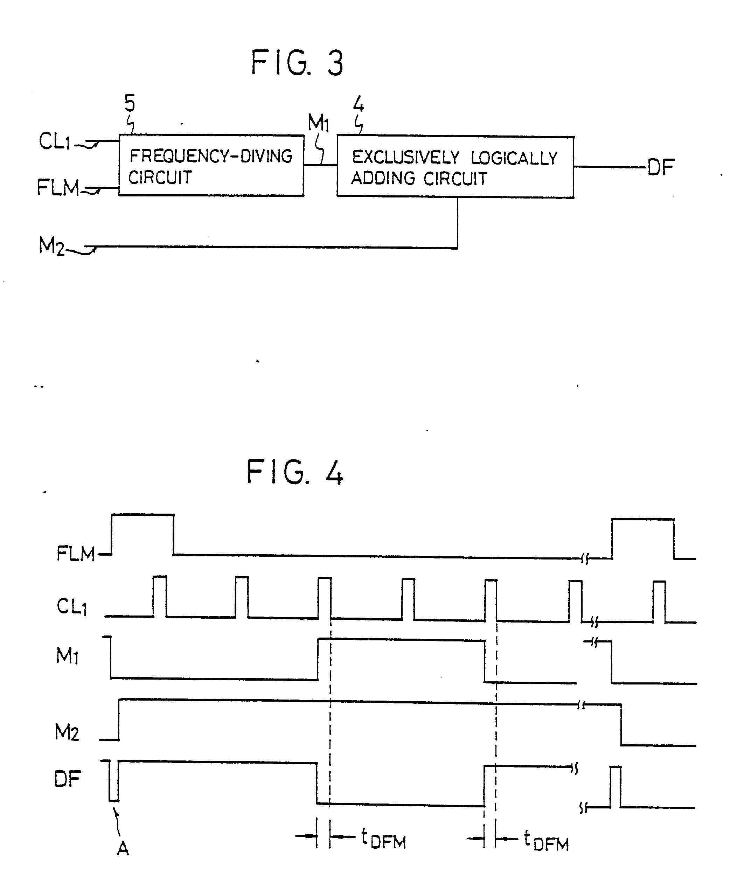

Figure 3 is a circuit diagram showing a second circuit for generating a polarity-inverting control signal DF. The control circuit in Figure 3 again processes various signals such as a shift clock signal CLI, a frame signal FLM, an infrequent-polarity-inverting signal $M_2$, which switches its polarity once in each frame, and a frequency divided output or frequent-polarity-inverting signal $M_1$, and the final polarity-inverting signal DF. The circuit comprises a frequency dividing circuit 5 for frequency dividing the shift clock signal CLI to produce the frequent-polarity-inverting signal $M_1$ and an exclusive OR circuit 4. Figure 4 is a timing chart illustrating the operation of the Figure 3 circuit.

Referring to Figures 3 and 4, the frame signal FLM re-sets the frequency dividing circuit 5, and the shift clock signal is applied to the circuit as a clock input. The frequency divided signal $M_1$ is generated by the frequency dividing circuit 5 and is applied to the exclusive OR circuit 4 where the logically exclusive addition of this signal with the infrequent-polarity-inverting signal $M_2$ is carried out to produce the final polarity-inverting signal DF. The final polarity-inverting signal DF may incidentally be subject to the following problems as shown in Figure 4.

Firstly, a timing difference $t_{DFM}$ occurs between a polarity-inverting edge of the final polarity-inverting signal DF and a trailing edge of the shift clock signal CLI. This timing difference $t_{DFM}$ depends on the pulse width of the shift clock signal CLI and must be limited below 500 ns in the case of a drive for a liquid crystal panel, because the liquid crystal panel drive cannot effect a normal display if the actual timing difference $t_{DFM}$ exceeds this limit. Accordingly, there is a limitation that the control circuit must match the timing of the liquid crystal panel drive in order to be compatible with the drive.

Further, since the frequency dividing circuit 5 is re-set by the signal FLM, a pulse A as shown in Figure 4 is generated in the signal DF due to polarity switching during the selective driving of the last scanning electrode. Therefore, for example, in the case of a display panel composed of 640 x 400 dots, there is the problem that a part of the display is disrupted on scanning of the 400th scanning electrode.

As described above, if the operating timing of the drive IC and the operating timing of the control circuit are not matched to each other, a normal display may not be effected. This means that only a specific control circuit is applicable, which creates such problems as inconvenience for the user and for the supplier due to the narrow operating range of the control circuit.

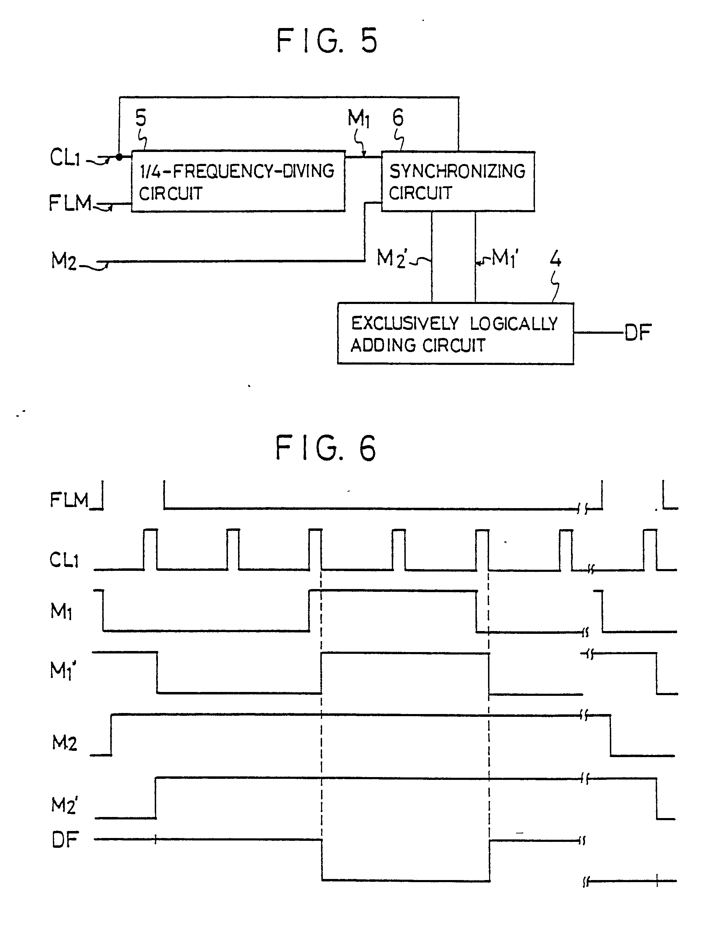

Figure 5 is a circuit diagram showing a further control circuit according to the present invention effective to eliminate the problem of the Figure 3 embodiment. In the control circuit of Figure 5, a synchronisation circuit 6 is added. The control circuit of Figure 5 further comprises a 1/4 frequency dividing circuit 5 and an exclusive OR circuit 4, which function in a manner similar to those provided in the control circuit of Figure 3. Therefore, their explanation will be omitted.

The control circuit of Figure 5 thus processes a shift clock signal CLI and a frame signal FLM in a manner similar to the processing of such signals in the control circuit of Figure 3.

An output signal $M_1$, i.e. the frequent-polarity-inverting signal, from the 1/4 frequency dividing circuit 5 is supplied to the synchronisation circuit 6. Further, an infrequent-polarity-inverting signal $M_2$ is also supplied to the synchronisation circuit 6. The synchronisation circuit 6 comprises a pair of D type flip-flops and outputs a signal $M_1'$ having the same waveform as the signal $M_1$ and a signal $M_2'$ having the same waveform as the signal $M_2$ in synchronisation with the trailing edge of the shift clock signal CLI as shown in Figure 6. The output signals $M_1'$ and $M_2'$ are subject to logically exclusive addition in the exclusive OR circuit 4 to produce the final polarity-inverting signal DF effective to switch the polarity of the bias voltages applied to the liquid crystal elements.

As described, the output signal $M_1$ from the 1/4 frequency dividing circuit 5 and the infrequent-polarity-inverting signal $M_2$ are converted into corresponding synchronised output signals $M_1'$ and $M_2'$ by means of the synchronisation circuit 6 in response to the trailing edges of respective pulses of the shift clock signal CLI, and hence the timing difference $t_{DFM}$ between the polarity-inverting edge of the final polarity-inverting signal DF and the trailing edge of the shift clock signal CLI is set to zero. Therefore, the interface timing of various types of control circuit is matched with the interface timing of the liquid crystal panel drive by the addition of a synchronisation signal.

Consequently, according to this embodiment of the present invention, the operating timing of the control circuit can always be matched to the interface timing of the liquid crystal panel drive. Thus, any type of control circuit can be utilised thereby broadening the application field. Further, since the timing difference $t_{DFM}$ between the polarity-inverting edge of the final polarity-inverting signal DF and the trailing edge of the shift clock signal CLI is set to zero, optimum conditions can be realised for the liquid crystal panel drive in order to suppress the current flow and thereby reduce the current consumption of the liquid crystal panel drive.

In a display panel of the type utilising two terminal non-linear elements such as MSI and MIM as active elements, the voltage ratio between selected and non-selected intersections can be set to be relatively great so as to increase the contrast. By eliminating the timing difference $t_{DFM}$, cases in which the slight amount of difference $t_{DFM}$ would cause a defective display in the form of a stripe pattern in each line scanning can be avoided. Further, the frequency dividing circuit carries out the 1/4 frequency division of the shift clock signal to produce a frequent-polarity-inverting signal effective to reduce the changes in the effective frequency of the bias voltages, which is generated dependent upon the display pattern (all selecting/ all non-selecting/character/graphic) in the prior art. The bias voltage frequency can be controlled uniformly throughout almost all of the matrix intersections so as to reduce the dependency of the threshold voltage of the liquid crystal material on the frequency. Accordingly, the present invention offers the significant advantage of eliminating the phenomenon of cross talk in the horizontal and vertical directions (depending on the display pattern), which causes serious problems in the prior art.

## Claims

1. A control circuit for generating a signal effective for switching the polarity of a driving voltage applied to a matrix display to effect AC driving of the matrix display, characterised by frequency dividing means (1, 2; 5) re-settable by a frame signal effective to initiate line sequential scanning of the matrix display and receptive of a clock signal effective to control the line sequential scanning, the frequency dividing means being arranged to divide the frequency of the clock signal to produce a frequent-polarity-inverting signal, and adding means (4) for exclusively logically adding the frequent-polarity-inverting signal to an infrequent-polarity-inverting signal, which undergoes polarity switching according to the timing of the frame signal, whereby to produce an added polarity-inverting signal effective to switch the polarity of the driving voltage.

2. A control circuit according to claim 1 characterised in that the frequency dividing means comprises means for dividing the frequency of the clock signal by four.

3. A control circuit according to claim 1 or 2 characterised in that the infrequent-polarity-inverting signal is arranged to undergo polarity switching once in each period having a duration 2N times as long as the period of the clock signal, where N is the number of scanning electrodes of the matrix display.

4. A control circuit according to claim 1, 2 or 3, characterised by synchronising means (6) for synchronising the frequent-polarity-inverting and infrequent-polarity-inverting signals with the clock signal.

5. A method of driving a matrix display in which the polarity of the driving voltage applied to the matrix display is periodically switched to effect AC driving of the matrix display, characterised by generating a frequent-polarity-inverting signal responsive to a frame signal effective to initiate line sequential scanning of the matrix display, the frequent-polarity-inverting signal being generated by dividing the frequency of a clock signal effective to control the line sequential scanning, and exclusively logically adding the frequent-polarity-inverting signal to an infrequent-polarity-inverting signal, which undergoes polarity switching according to the timing of the frame signal, whereby to produce an added polarity inverting signal effective to switch the polarity of the driving voltage.

# FIG. 1

EP 0 355 054 A2

# FIG. 2

# FIG. 3

# FIG. 4

# FIG. 5

```
CL1 ─●────┐                    M1   6
          │   ┌──────────────┐  │ ┌──────────────┐
          │  5│ 1/4-FREQUENCY-DIVING│ │ SYNCHRONIZING│
FLM ──────┼──│ CIRCUIT       │─────│ CIRCUIT       │
          │   └──────────────┘     └──────────────┘
M2 ───────┼────────────────────┐    │         │
                            M2'─┘    │         └─M1'  4
                              ┌──────┴─────────────┐
                              │ EXCLUSIVELY LOGICALLY│──DF
                              │ ADDING CIRCUIT      │
                              └────────────────────┘
```

# FIG. 6

EP 0 355 054 A2

# FIG. 7

PRIOR ART